# EUROPEAN PATENT APPLICATION

(11) **EP 3 922 981 A1**
(43) Date of publication of application: **15.12.2021**
(21) Application number: 20179187.8
(22) Date of filing: 10.06.2020
(51) Int. Cl.: G01N 21/37, G01N 21/3504

(54) **NON-DISPERSIVE INFRARED SPECTROSCOPY WITH FREQUENCY COMB SOURCE**

(71) Applicant: ABB Schweiz AG, 5400 Baden (CH)
(72) Inventor: Bleil, Stefan, 61348 Bad Homburg, HE (DE)
(74) Representative: Maiwald Patent- und Rechtsanwaltsgesellschaft mbH

(57) **Abstract**

A method (100) for measuring infrared absorption of a sample (2) comprises the steps of:
• passing (110) laser light (1a) from a frequency comb source (1) through the sample (2), wherein said frequency comb source (1) emits a plurality of distinct frequency components spaced apart in an equidistant manner;
• passing (120) the light (2a) leaving the sample (2) to at least one opto-pneumatic detector (3); and
• evaluating (130) the sought infrared absorption (2*) of the sample (2) from detection signals provided by said opto-pneumatic detector. The method may be used to analyze flue gas flowing through a smokestack of an industrial plant or power generation plant.

A corresponding system for measuring infrared absorption of a sample comprises a frequency comb source and an opto-pneumatic detector. The frequency comb source may be a semiconductor laser configured to emit laser light having a periodically modulated intensity.

## Description

### FIELD OF THE INVENTION

The present invention relates to non-dispersive infrared spectroscopy that is widely used for gas analysis, in particular for the monitoring of flue gases.

### BACKGROUND OF THE INVENTION

Every molecule is made of individual atoms that are connected by bindings. Many such bindings can be excited from a ground state to an excited state by supplying photons with a characteristic energy. If an excitation event happens, the energy of the photon is transferred into the excitation, and the photon is absorbed. For very many molecules, the energies required for excitation events are in the infrared part of the electromagnetic spectrum.

Therefore, different molecules may be distinguished from one another, and the concentration of chemical substances may be quantitatively measured, in a sample by monitoring the infrared absorption of the sample.

WO 2013/017 212 A1 discloses an exemplary gas analysis device based on non-dispersive infrared spectroscopy. Light from an infrared light source is passed through a chamber with a gas sample into a detector that is selectively sensitive to the to-be-analyzed wavelengths. The higher the concentration of the sought molecule in the chamber, the more light at these wavelengths is absorbed in the chamber, and the less light arrives at the detector. In particular, the detector may be an opto-pneumatic detector filled with the same gas that is sought in the sample.

### DISCLOSURE OF THE INVENTION

The inventors have developed a method for measuring infrared absorption of a sample. Laser light from a frequency comb source is passed through the sample. Light leaving the sample is passed to at least one detector. This detector may be sensitive to a set of individual frequencies, and/or to a continuum of frequencies within a certain range. For every frequency to which the detector is sensitive, the detector converts a variation of the light intensity into a variation of at least one other physical property. The sought infrared absorption of the sample is evaluated from a measurement of this other physical property.

The frequency comb source emits a plurality of distinct frequency components spaced apart in an equidistant manner. The inventor has found that this kind of light source is much more advantageous than lamps that are most commonly used as broadband infrared light sources. A lamp distributes its intensity over all directions. The light may be collected and at least partially collimated into a beam that may be passed through the sample. But the efficiency of such collimation is always limited, and the divergence of the beam is still notable. The light source, the chamber with the sample and the detector need to be quite close together in order not to lose too much intensity.

This limitation is removed by replacing the lamp with a frequency comb source. The light is laser light that is inherently a highly focused beam with very low divergence, so the light may be conveyed over a large distance without an overly high loss in intensity. This brings about a high amount of freedom to arrange the light source, the chamber and the detector in an optical path in a manner that is most suitable for the task at hand.

At the same time, the light is not monochromatic like the light from normal lasers. Rather, the many distinct frequency components emitted by the comb source still cover the range of infrared frequencies that needs to be analyzed. Of course, all frequencies between the distinct frequency components are missing from the emission spectrum of the frequency comb source, so the resolution on the frequency scale is limited by the spacing between the frequency components. But for the practical task of determining, from the infrared absorption of the sample, the chemical composition of the sample, and/or the presence or concentration of a particular sought molecule in the sample, this is not a problem. The spacing between the frequency components just needs to be arranged such that at least one frequency component matches a relevant absorption line of the sample sufficiently well, so that the presence of a molecule that is relevant for the analysis at hand will manifest itself in absorption of some of the laser light.

In this manner, using a frequency comb source as the light source combines the advantage of a lamp, namely a large set of usable infrared frequencies, with the advantage of a laser, namely a highly collimated beam that is able to propagate over a large distance. In an existing infrared spectroscopy set-up, the lamp may simply be replaced with the frequency comb source. No further modifications to the set-up are strictly mandatory. However, the optical set-up for guiding the light through the sample and into the detector may be greatly simplified because no collimation of initially diverging light is necessary any more.

In a particular advantageous embodiment, the sample comprises flue gas from an industrial plant or a power generation plant. When running such plants, it needs to be monitored that concentrations of certain molecules, such as carbon monoxide (CO), carbon dioxide (CO₂) or sulfur dioxide (SO₂), in the flue gas remain below permissible limits. Because the laser light from the frequency comb source is able to propagate over large distances, in a particularly advantageous embodiment, the laser light may be passed through the flue gas within a smokestack that is configured to remove the flue gas from the industrial plant or power generation plant. This has at least two distinct advantages:
First, the monitoring may be converted from a periodic monitoring to a continuous, online monitoring. Previously, at certain time intervals, a sample of the flue gas had to be drawn somewhere and placed in a chamber to be analyzed by an analysis device. Events that emitted a high concentration of the sought molecule for only a short amount of time between two such samplings could remain unnoticed. If the measurement is performed continuously directly in the smokestack, it will react immediately to an increase in the concentration of the sought substance. In this manner, abnormal operating states may be detected more quickly, and corrective action may be taken.
Second, the accuracy and sensitivity are increased. The concentration of certain molecules in the flue gas may not be uniform within the smokestack. If there is an area with a high concentration of the sought molecule, but a sample for analysis is taken somewhere else, than the high concentration may not be noticed. By passing the laser light along the length of the smokestack, the signal may be integrated over a large volume of flue gas. If the sought molecule is present anywhere along the path of the laser light, then absorption happens, and this will remain encoded in the laser light as it passes further on through the flue gas. That is, once the laser beam has acquired some information on its path to the detector, it will not lose this information again just by travelling onwards for longer. Rather, the longer the laser beam travels through the flue gas, the more sensitive the measurement is. Even trace amounts of sought molecules may be detected.

In a particularly advantageous embodiment, the intensity of the laser light is periodically modulated, and a variation of the other physical property of the detector that has the same periodicity is measured. In this manner, the part of the detector signal that is actually caused by the laser light leaving the sample may be distinguished from any other contributions to the detector signal.

Intensity modulation of laser light is a lot easier to accomplish than intensity modulation of lamp light. Electro-optical modulation of infrared light is difficult because modulators are not readily available in this frequency range, so lamp light is usually passed through a rotating mechanical chopper. By contrast, many lasers have an option for electrically driven intensity modulation already built in. For example, if the frequency comb source comprises a semiconductor laser, the intensity of the laser light may be varied by modulating a current that is driven through that semiconductor laser. Many semiconductor lasers have an input for such a modulation.

Alternatively or in combination, the measurement signal may also be modulated in another manner, namely by alternating periodically between passing the laser light through the sample and passing the laser light through a reference sample with a reference substance.

For example, if the optical path is alternated between passing through a chamber with the to-be-analyzed gas sample and passing through a chamber with a reference sample that comprises a sought molecule, part of the detector signal will be modulated with the same frequency with which the optical path is alternated. The amplitude of the modulation will depend on the difference between the concentration of the sought molecule in the reference sample and the concentration of the sought molecule in the to-be-analyzed sample. The dependency of said amplitude on said difference may be calibrated, so as to allow to quantitatively measure the concentration of the sought molecule in the to-be-analyzed sample.

Typical modulation frequencies for either kind of modulation are on the order of between 7 and 9 Hz.

Because the laser light is inherently collimated to a much larger degree than this is achievable for lamp light even with very sophisticated optics, it is much easier to alternate the path of laser light between passing through one sample or the other sample than it is to alternate the path of lamp light between passing through the one or the other sample.

In a particularly advantageous embodiment, the detector comprises an opto-pneumatic detector that passes the impinging light through an enclosed reservoir filled with a measurement gas and converts a change of pressure of the measurement gas into an electrical signal. Whenever infrared light is absorbed by the measurement gas, this increases the temperature of the measurement gas, which in turn increases the pressure of the measurement gas. The variation of the pressure may be converted into an electrical signal by means of a microphone or any other suitable transducer. Such an opto-pneumatic detector is only sensitive to frequencies at which the measurement gas exhibits a relevant amount of absorption. The ability of laser light to propagate over long distances alleviates size limitations for the detector. In particular, because a longer optical path will not decrease the intensity of the laser light too much, the first detector may be at least partially transparent, and the light leaving the first detector may be passed into a second detector that is filled with a different measurement gas than the first one. In this manner, the sample may be analyzed for multiple sought molecules at the same time.

One advantage of opto-pneumatical detectors is that the spectral selectivity is brought about in a particularly easy manner, by means of the measurement gas, rather than by spectral filtering of the light. Previously, with lamp light, spectral filtering was much more difficult. Now, with laser light from a frequency comb source, spectral filtering becomes much easier. If spectral filtering is used, a much simpler and faster detector that directly converts impinging photons into an electrical signal may be used.

Therefore, in a further particularly advantageous embodiment, the light entering the sample, and/or the light leaving the sample, is spectrally filtered, so that only distinct frequency components are allowed to pass. In particular, the center frequency of the passband of the spectral filtering may be varied, so that the measured infrared absorption is a wavelength-dependent infrared absorption.

Spectral filtering of the light from the frequency comb source is easier because the constraints on the width of the passband are much more relaxed. With a lamp as a light source, a fairly narrow passband width is needed in order to achieve a good resolution on the frequency scale. But the light of the frequency comb source has only one frequency component in an interval that is centered on this component and extends to either side by an amount corresponding to the spacing between frequency components. Therefore, a spectral filter may have a much wider passband and still let only one frequency component pass.

Therefore, in a further particularly advantageous embodiment, the width of the passband of the spectral filtering is at least 2 times the largest full width at half maximum of any frequency component of the frequency comb source, but less than 2 times the periodic spacing of the distinct frequency components.

As discussed previously, the method may be implemented on an existing measurement set-up by merely substituting a previously used lamp source with a laser frequency comb source, and optionally simplifying the optics with which the light is guided through the sample and into the one or more detectors. But it is also possible to specifically configure the detector so that it exploits the new freedom brought about by the use of far-propagating laser light.

Therefore, the invention also provides a system or kit-of-parts for measuring infrared absorption of a sample. This system or kit-of-parts comprises a frequency comb source that is configured to emit laser light with a plurality of distinct frequency components spaced apart in an equidistant manner. The system or kit-of-parts also comprises an opto-pneumatic detector that is configured to receive laser light that has been transmitted through the sample, pass this impinging light through an enclosed reservoir filled with a measurement gas and convert a change of pressure of the measurement gas into an electrical signal.

In particular, as discussed before, the detector may be made larger than it was previously possible, and more detectors may be cascaded in order to detect multiple sought molecules simultaneously.

### DESCRIPTION OF THE FIGURES

In the following, the invention is illustrated using Figures without any intention to limit the scope of the invention. The Figures show:
Figure 1: Exemplary embodiment of the method 100;
Figure 2: Exemplary implementation of the method 100 in an industrial plant 10 that emits flue gas 11.

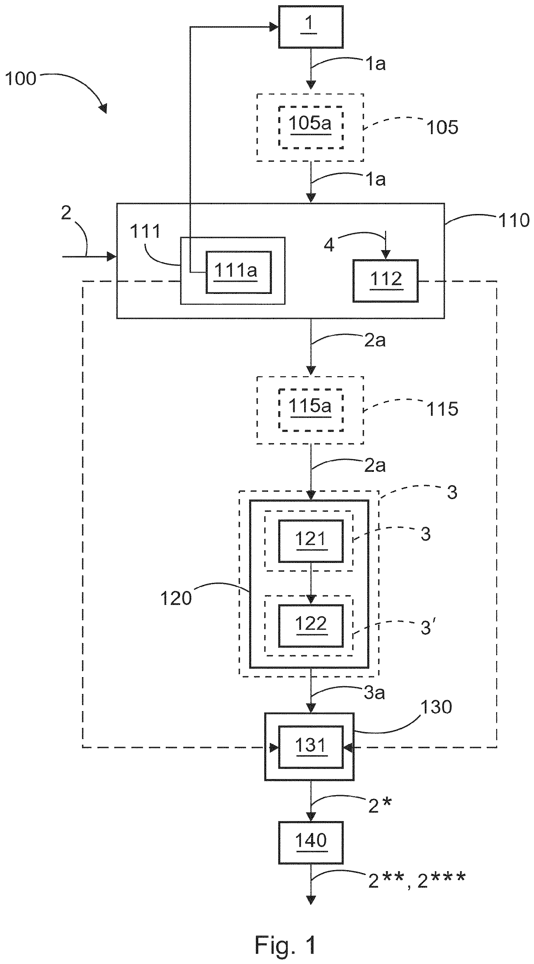

Figure 1 is a schematic flow chart of an exemplary embodiment of the method 100. A frequency comb source 1 emits laser light 1a with many frequency components spaced apart in an equidistant manner. Optionally, in step 105, this laser light 1a may be spectrally filtered. In step 105a, the center of the passband of such filtering may be varied, so as to pass different frequencies on to the sample 2 at different times.

In step 110, the laser light 1a is passed through the sample 2. According to block 111, the intensity of the laser light 1a may be periodically modulated, and according to block 111a, such modulation may be effected by modulating a current that is driven through a semiconductor laser. Another way to introduce a modulation is to alternate between passing the laser light 1a through the actual to-be-analyzed sample 2 and passing the laser light 1a through a reference sample 4, according to block 112.

Optionally, in step 115, the light 2a leaving the sample 2 may be spectrally filtered. In step 115a, the center of the passband may be varied, so as to pass different frequencies on at different times.

In step 120, the light 2a leaving the sample, spectrally filtered or not, is passed to the detector 3. Optionally, according to block 121, the light may first be passed through a first detector 3, and according to block 122, the light leaving this first detector 3 may then be passed through a second detector 3' that is filled with a different measurement gas and thus sensitive to different frequencies.

For every frequency on which the detector 3 is sensitive, it converts a variation of the intensity of the impinging light 2a to a variation of a physical property 3a that may then be measured. From this physical property 3a, in step 130, the sought infrared absorption 2* is evaluated. Optionally, if any sort of periodic modulation has been applied before (such as modulating the light intensity or alternating between the actual sample 2 and a reference sample 4, according to block 131, a variation of the physical property 3a with the same periodicity may be measured.

In step 140, the infrared absorption 2* may be evaluated further to yield the chemical composition 2** of the sample 2, and/or the presence or concentration 2*** of a particular sought molecule in the sample 2.

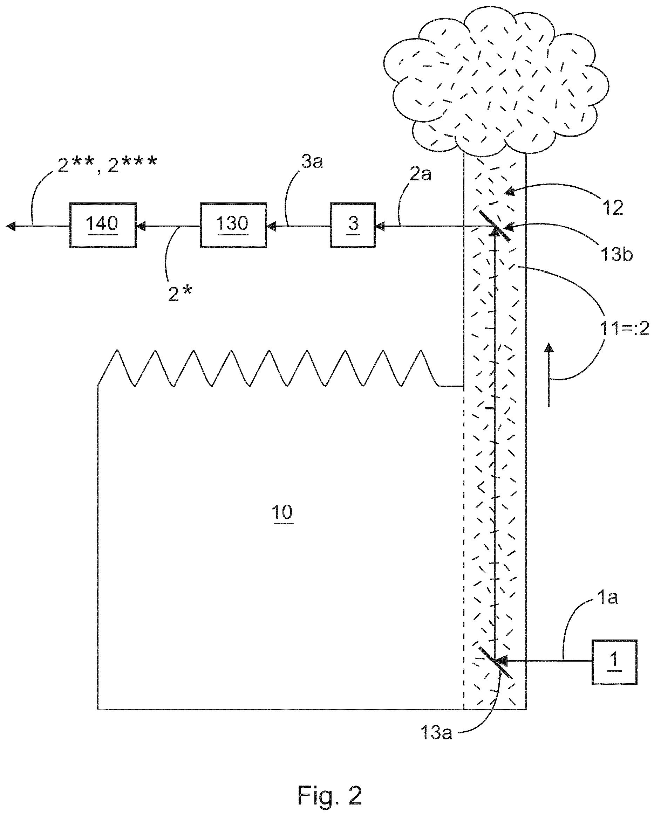

Figure 2 shows an exemplary application of the method to an industrial plant and/or power generation plant 10 that emits flue gas 11 from a smokestack 12. By means of the mirrors 13a and 13b, the laser light 1a from the frequency comb source 1 is passed through the flue gas 11 as sample 2 along the length of the smokestack 12, so as to collect as much infrared absorption 2*. The light 2a leaving the smokestack 12 is passed to the detector 3. After the altered physical property 3a has been measured, the infrared absorption 2* is again evaluated from this in step 130, and this is evaluated further for the chemical composition 2** of the sample 2, and/or the presence or concentration 2*** of a particular sought molecule in the sample 2, in step 140.

### List of reference signs

- 1: frequency comb source
- 1a: laser light from comb source 1
- 2: sample
- 2a: laser light leaving sample 2
- 2*: infrared absorption of sample 2
- 2**: chemical composition of sample 2
- 2***: presence or concentration of sought molecule in sample 2
- 3,3': detector
- 3a: physical property, altered in detector 3
- 4: reference sample
- 10: industrial plant or power generation plant
- 11: flue gas, emitted by plant 10
- 12: smokestack of plant 10
- 13a, 13b: mirrors
- 100: method for measuring infrared absorption 2*
- 105: spectral filtering of laser light 1a
- 105a: varying center of passband for filtering 105
- 110: passing laser light 1a through sample 2
- 111: periodically modulating intensity of laser light 1a
- 111a: modulating current driven through semiconductor laser
- 112: alternating between actual sample 2 and reference sample 4
- 115: spectral filtering of light 2a leaving sample
- 115a: varying center of passband for filtering 115
- 120: passing light 2a to detector 3
- 121: passing light 2a through first detector 3
- 122: passing light 2a further on through second detector 3'
- 130: evaluating infrared absorption 2* from property 3a
- 131: measuring modulated variation of property 3a
- 140: evaluating composition 2**, presence/concentration 2***

## Claims

1. A method (100) for measuring infrared absorption of a sample (2), comprising the steps of:
• passing (110) laser light (1a) from a frequency comb source (1) through the sample (2), wherein said frequency comb source (1) emits a plurality of distinct frequency components spaced apart in an equidistant manner;
• passing (120) the light (2a) leaving the sample (2) to at least one detector (3) that converts a variation of the light intensity impinging on the detector (3) at frequencies to which the detector is sensitive into a variation of at least one other physical property (3a); and
• evaluating (130) the sought infrared absorption (2*) of the sample (2) from a measurement of said other physical property (3a).

2. The method (100) of claim 1, further comprising: periodically modulating (111) the intensity of the laser light (1a) and measuring (131) a variation of said other physical property (3a) that has the same periodicity.

3. The method (100) of claim 2, wherein the frequency comb source (1) comprises a semiconductor laser and wherein the intensity of the laser light (1a) is varied (111a) by modulating a current that is driven through said semiconductor laser.

4. The method (100) of any one of claims 1 to 3, further comprising: alternating (112) periodically between passing the laser light (1a) through the sample (2) and passing the laser light (1a) through a reference sample (4) with a reference substance.

5. The method (100) of any one of claims 2 to 4, wherein the detector (3) comprises an opto-pneumatic detector that passes the impinging light (2a) through an enclosed reservoir filled with a measurement gas and converts a change of pressure of the measurement gas into an electrical signal.

6. The method (100) of claim 5, further comprising: passing (121) the light (2a) leaving the sample through a first detector (3) that is at least partially transparent, and then passing (122) the light leaving the first detector (3) into a second detector (3'), wherein the two detectors (3, 3') are filled with different measurement gases.

7. The method (100) of any one of claims 1 to 6, further comprising: determining (140), from the infrared absorption of the sample (2), the chemical composition (2**) of the sample (2), and/or the presence or concentration (2***) of a particular sought molecule in the sample (2).

8. The method (100) of claims 5 and claim 7 and optionally claim 6, wherein the measurement gas comprises the sought molecule.

9. The method (100) of claims 4, 5 and 7, and optionally claim 6, wherein the reference sample (4) comprises the sought molecule as the reference substance.

10. The method (100) of any one of claims 1 to 9, wherein the sample (2) comprises flue gas (11) from an industrial plant or power generation plant (10).

11. The method (100) of claim 10, wherein the laser light is passed (124) through the flue gas (11) within a smokestack (12) that is configured to remove the flue gas (11) from the industrial plant or power generation plant (10).

12. The method (100) of any one of claims 1 to 11, further comprising: spectrally filtering (105) the light (1a) entering the sample (2), and/or spectrally filtering (115) the light (2a) leaving the sample (2), so that only one of said distinct frequency components is allowed to pass.

13. The method (100) of claim 12, further comprising: varying (105a, 115a) the center frequency of the passband of the spectral filtering (105, 115), so that the measured infrared absorption (2*) is a wavelength-dependent infrared absorption.

14. The method (100) of any one of claims 12 and 13, wherein the width of the passband of the spectral filtering (105, 115) is at least 2 times the largest full width at half maximum of any frequency component of the frequency comb source, but less than 2 times the periodic spacing of the distinct frequency components.

15. A system or kit-of-parts for measuring infrared absorption (2*) of a sample (2), comprising: a frequency comb source (1) that is configured to emit laser light (1a) with a plurality of distinct frequency components spaced apart in an equidistant manner, and an opto-pneumatic detector (3) that is configured to receive laser light (2a) that has been transmitted through the sample (2), pass this impinging light through an enclosed reservoir filled with a measurement gas and convert a change of pressure of the measurement gas into an electrical signal.
